(19) Europäisches Patentamt
European Patent Office
Office européen des brevets

(11) EP 0 875 952 B1

(12) **FASCICULE DE BREVET EUROPEEN**

(45) Date de publication et mention de la délivrance du brevet:
**24.10.2001 Bulletin 2001/43**

(51) Int Cl.[7]: **H01M 10/40**, H01M 10/04

(21) Numéro de dépôt: **98201306.2**

(22) Date de dépôt: **23.04.1998**

(54) **Piles au lithium ultra-minces et à l'etat solide et procédé de fabrication**

Dünnschicht Feststoff Lithiumzellen und Verfahren zur Herstellung

Very thin solid state lithium cells and process of manufacture

(84) Etats contractants désignés:
**DE FR GB IT**

(30) Priorité: **23.04.1997 CA 2203490**
**28.04.1997 CA 2203869**

(43) Date de publication de la demande:
**04.11.1998 Bulletin 1998/45**

(73) Titulaire: **HYDRO-QUEBEC**
**Montréal Québec H2Z 1A4 (CA)**

(72) Inventeurs:
- **Gauthier, Michel**
**La Pairie Quebec J5R 1E6 (CA)**
- **Lessard, Ginette**
**Longueuil, Quebec J4M 1V5 (CA)**
- **Vassort, Guy**
**Longueuil, Quebec J4G 2N8 (CA)**
- **Bouchard, Patrick**
**Longueuil, Quebec J4G 1V1 (CA)**
- **Vallee, Alain**
**Varennes, Quebec J3X 1Y9 (CA)**
- **Perrier, Michel**
**Montreal, Quebec H1Y 3C1 (CA)**

(74) Mandataire: **Guerre, Dominique et al**
**Cabinet Germain et Maureau,**
**12, rue Boileau,**
**BP 6153**
**69466 Lyon Cedex 06 (FR)**

(56) Documents cités:

| | |
|---|---|
| **WO-A-91/11287** | **WO-A-95/07555** |
| **WO-A-95/15589** | **US-A- 4 317 874** |
| **US-A- 5 019 467** | **US-A- 5 035 965** |
| **US-A- 5 437 692** | **US-A- 5 494 495** |
| **US-A- 5 522 955** | **US-A- 5 601 623** |

- **PATENT ABSTRACTS OF JAPAN vol. 009, no. 193 (E-334), 9 août 1985 & JP 60 059655 A (HITACHI MAXELL KK), 6 avril 1985**
- **PATENT ABSTRACTS OF JAPAN vol. 014, no. 045 (E-0880), 26 janvier 1990 & JP 01 276567 A (BROTHER IND LTD), 7 novembre 1989**
- **PATENT ABSTRACTS OF JAPAN vol. 013, no. 201 (E-757), 12 mai 1989 & JP 01 021870 A (MATSUSHITA ELECTRIC IND CO LTD), 25 janvier 1989**
- **PATENT ABSTRACTS OF JAPAN vol. 009, no. 031 (E-295), 9 février 1985 & JP 59 173955 A (HITACHI MAXELL KK), 2 octobre 1984**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 875 952 B1

## Description

La présente invention concerne des piles au lithium ultra-minces et à l'état solide et leur procédé de fabrication. De façon plus générale, l'invention se rapporte à un procédé de fabrication de piles minces à électrolyte polymère et à anode de lithium ou de sodium, ainsi qu'aux piles obtenues par ce procédé. Plus particulièrement, l'invention se rapporte à la préparation de piles à électrolyte polymère à partir d'une pile laminée-mère qu'on découpe à vif mécaniquement. En d'autres termes, la présente invention concerne l'utilisation d'une pile laminée de grande surface préparée par des procédés en continu dont le design est particulièrement favorable à la fabrication de plus petits éléments par simple découpe directe du laminé ainsi que le procédé de fabrication de petites piles ultra-minces par découpe mécanique.

ART ANTERIEUR

Au cours des dix dernières années les piles au lithium de type primaire et rechargeable ont fait l'objet d'un nombre considérable de travaux de recherche et de développement. L'objectif est de développer une pile peu coûteuse, ayant un grand contenu énergétique et de bonne performances électrochimiques. Dans cette optique de nombreuses configurations de pile ont été développées pour répondre aux différentes applications telles la micro-électronique, les télécommunications, les ordinateurs portables et le véhicule électrique pour ne nommer que ceux là.

Les piles ou générateurs électrochimiques, qu'ils soient rechargeables ou non, sont tous constitués d'une anode qui elle peut être constituée d'un métal comme le lithium, d'une cathode qui elle est constituée d'un composé d'insertion, insérant de manière réversible ou non les ions alcalins, comme l'oxyde de vanadium ou le dioxyde de manganèse, d'un séparateur mécanique placé entre les électrodes, et d'une composante électrolytique. Par composante électrolytique on entend toute matière comprise dans le générateur servant au transport ionique, à l'exception des matériaux actifs de l'électrode, dans lesquels les ions $Li^+$ peuvent se déplacer, tant au niveau du séparateur que dans l'électrode composite. Lors de la décharge ou de la charge du générateur, la composante électrolytique assure le transport des espèces ioniques à travers tout le générateur soit d'une électrode à l'autre et à l'intérieur même de l'électrode composite. Dans une pile à électrolyte polymère, les fonctions de séparateur et de composante électrolytique sont généralement réunies dans un seul et même matériau.

Les petites piles au lithium, rechargeables ou non, telles que les piles boutons et les piles plates sont généralement fabriquées par l'élaboration et la découpe des composantes individuelles qui sont par la suite assemblées. Dans certains cas de piles plates constituées de films minces, les piles ou leurs composantes sont élaborées sous forme de piles ou d'éléments multiples de dimension prédéterminée qui sont par la suite découpées dans des zones inactives électrochimiquement prévues à cet effet de façon à permettre la découpe locale sans dommages pour le dispositif électrochimique. Des exemples de piles utilisant ce procédé de fabrication sont décris dans les brevets U. S. Nos 4.177.330, 5.378.557 et 5.547.780.

Dans la plupart de ces cas, les électrodes actives: lithium métallique et cathode composite, sont directement en contact avec le matériau d'emballage qui sert alors de barrière de protection et de collecteur de courant; souvent ces électrodes sont élaborées directement sur le matériau d'emballage par enduction ou par pressage. Cette combinaison de deux fonctions: barrière et collecteur sur un même matériau, permet alors d'optimiser le poids et le volume de la pile complète.

Cette façon de faire possède cependant plusieurs inconvénients:

- le besoin de prédéterminer les dimensions et la position des éléments ou des piles lors de la fabrication d'éléments multiples à découper;
- les pertes en matériel et en optimisation associées aux débordements et au prépositionnement requis par les opérations de découpe et de scellement de l'ensemble du dispositif;
- les problèmes de positionnement des éléments les uns sur les autres lors de l'assemblage ou de la découpe;
- la surépaisseur requise pour qu'un même matériau puisse servir à la fois comme barrière étanche à l'air et à l'eau et comme collecteur. Cette surépaisseur devient particulièrement pénalisante dans les assemblages de piles constituées de films minces misent en série ou en parallèle, i.e., lorsque plusieurs piles individuelles sont superposées pour développer le voltage ou l'ampérage voulu.

La découpe mécanique d'une pile à électrolyte polymère en morceaux est a priori possible, toutefois il est généralement perçu que la découpe induit des courts-circuits et laisse des points faibles surtout lorsque cette opération est faite avec des moyens mécaniques (brevet U.S. No 5.250.784); ce que confirme indirectement les procédés plus complexes de découpe de piles multiples (brevets U.S. Nos 5.378.557 et 5.547.780) où l'on découpe dans des zones pré-déterminées non-électrochimiquement actives. Plusieurs fois les inventeurs ont réalisé la découpe mécanique d'une pile laminée en films minces à l'aide, par exemple, d'une paire de ciseaux sans perte permanente du voltage des pièces. Toutefois ces essais effectués sous air ambiant ne pouvait suggérer un procédé de fabrication car, d'une part, ils reposent sur l'oxydation irréversible du lithium par l'eau et les composants de l'air et d'autre part parce qu'il est connu que la découpe mécanique elle même crée des zones favorables au développement des courts-circuits, notamment lors du cyclage, par suite du travail mécanique de découpe qui tend à rapprocher les collecteurs de l'anode et de la cathode.

L'invention a pour objet la fabrication de piles à électrolyte polymère et à anode de lithium ou de sodium qui fait intervenir un effet surprenant d'auto-cicatrisation de l'anode, ce qui facilite la découpe en petits éléments avec un taux de rejet faible ou nul.

L'invention a aussi pour objet un procédé de découpe d'une pile laminée-mère qui ne laisse pas de points faibles électrochimiquement tel que démontré par le cyclage électrochimique de piles réalisées selon l'invention.

L'invention a pour autre objet un procédé de fabrication de piles qui, de façon non-limitatif, fait intervenir la dissolution chimique ou électrochimique du lithium ou sodium métallique lorsque mis en contact avec le matériau de la cathode afin de rationaliser le mécanisme d'auto-cicatrisation.

L'invention a aussi pour objet de démontrer par des exemples qu'un mécanisme d'auto-cicatrisation existe qui tend à résorber le court-circuit souvent provoqué par la découpe mécanique et ce, même en l'absence d'air et d'eau.

L'invention a encore pour objet de démontrer par des essais de cyclage que le phénomène d'auto-cicatrisation tend à éliminer le lithium des zones de découpe.

Un autre objet de l'invention réside en la conception d'un procédé de fabrication simplifié basé sur la découpe à vif d'une pile de grande surface préparée par des procédés continus, sans avoir à présumer à l'avance de la forme ou de la dimension de la pile à produire.

L'invention concerne un procédé de fabrication de piles à électrolyte polymère gélifié ou non et à anode à base de lithium ou de sodium, à partir d'une pile-mère laminée de grande surface comportant un feuillard d'anode à base de lithium ou de sodium, un électrolyte polymère ainsi qu'une cathode sous forme de film mince, caractérisé en ce que la cathode a la propriété de dissoudre le lithium ou le sodium, et l'on effectue une découpe mécanique à vif de la pile-mère faisant en sorte de mettre en jeu un phénomène d'auto-cicatrisation résultant en une dissolution chimique dans la cathode de tout lithium ou sodium ayant été en contact avec la cathode au cours de la découpe.

De préférence, l'anode est à base de lithium métallique. D'autre part, il est préférable que l'électrolyte polymère soit conducteur des ions alcalins de l'anode et qu'il agisse également comme séparateur entre l'anode et la cathode.

Selon une autre réalisation préférée, la pile-mère comporte une cathode composite constituée d'un composé réductible au lithium ou au sodium, d'un additif de conduction électronique et d'un liant électrolyte polymère. De plus, on peut prévoir un revêtement conducteur électronique mince sur la face externe de l'anode et éventuellement de la cathode, dont le matériau conducteur est chimiquement et électrochimiquement inerte vis-à-vis du matériau d'électrode et sert également à établir des contacts électriques permanents sur les faces externes des piles découpées. L'épaisseur du revêtement conducteur de l'anode et éventuellement de la cathode est de préférence inférieur à 5 micromètres ($\mu$m) de façon à minimiser le poids et le volume et à conserver la flexibilité de l'ensemble de la pile mince.

Le revêtement conducteur est par exemple un mince feuillard métallique à base de nickel ou de fer tel que décrit dans le brevet U.S. No 5.423.974. Il peut aussi être constitué d'une composite comportant un liant polymère inerte et une charge conductrice électronique dispersée et inerte vis-à-vis du matériau d'électrode. Quant à la charge conductrice, cette dernière peut être une poudre conductrice inerte au lithium comprenant, de façon non-limitative, des nitrures, carbures et borures métalliques, dans le cas de l'anode ou elle peut comprendre également du carbone dans le cas du revêtement conducteur de la cathode. Le liant polymère inerte est non conducteur ionique et peut comprendre, à titre non-limitatif, des motifs monomères éthylène et propylène, par exemple le liant polymère est choisi parmi le polyéthylène, le polypropylène ou le copolymère éthylène propylène diene (EPDM). Le liant polymère inerte peut être préparé à partir de prépolymères et/ou de monomères fonctionnels réticulables facile à mettre en oeuvre. A titre d'exemple non-limitatif de groupements fonctionnels on retrouve : les acrylates, les méthacrylates, les allyles, les vinyles ou une combinaison de ces derniers. Dans le cas de la cathode, le liant polymère inerte peut comprendre également des motifs fluorés, dont le fluorure de vinyldiene (PVDF) ou le copolymère de fluorure de vinyldiene - co-hexafluoropropène (PVDF-HFP). Le choix du liant inerte est basé en premier lieu sur sa compatibilité avec les matériaux actifs de l'électrode correspondante.

Dans certains cas, le liant polymère inerte pourra être un adhésif, notamment un thermo-adhésif, de façon à faciliter le positionnement des piles et la qualité des contacts électriques.

Le revêtement conducteur composite devrait posséder une résistance de surface variant entre 0.1 et 1000 $\Omega/cm^2$, préférentiellement entre 1 et 300 $\Omega/cm^2$, de façon à limiter un courant de court-circuit lors de la découpe, pour des raisons de maintien de l'état de charge et pour la sécurité des opérations de découpe.

Selon une autre réalisation, la pile-mère est obtenue à partir de films continus d'anode, de cathode et d'électrolyte polymère, lesquels sont assemblés par des procédés d'enduction et de transfert de films, ces films étant adhérents entre eux. Au besoin, des étapes de réticulation sont utilisées avant ou après l'enduction ou le transfert des films.

Une fois les piles minces obtenues, on peut les empiler en parallèle ou en série, ou on peut les empiler après pliage en zigzag. On peut aussi mettre dans un emballage constitué par un boîtier unique, les piles minces individuelles ou empilées en parallèles ou en série.

Selon une autre réalisation de l'invention, la pile-mère laminée comporte un film de support pelable sur au moins une de ses faces de façon à faciliter sa production et sa manipulation. Ce film support pelable est constitué préférentiellement et de façon non-limitative de polypropylène ou de polyéthylène, et on l'enlève juste avant l'opération de découpe des piles.

L'électrolyte polymère du séparateur et au besoin de l'électrode est notamment constitué de masse moléculaire supérieure à 50 000 de façon à obtenir des films manipulables et transférables par des procédés de laminage en continu. On peut aussi utiliser un électrolyte polymère gélifié de façon à optimiser la conductivité ionique à la température ambiante. Par polymère gélifié on entend une matrice polymère capable d'incorporer un solvant organique aprotique polaire de façon à former un gel.

Selon une autre réalisation, l'électrolyte polymère est constitué d'une matrice polymérique et on rend cette dernière conductrice par l'ajout d'au moins un solvant aprotique polaire et d'un sel de métal alcalin soluble dans l'électrolyte. Cette addition d'un solvant liquide aprotique polaire peut se faire après l'opération de découpe de façon à minimiser le courant de court-circuit lors de la découpe. Il en est de même pour le sel alcalin qu'on ajoute de préférence après l'opération de découpe de façon à minimiser le courant de court-circuit. Lors de l'opération de découpe, il est également possible de refroidir la pile à une température inférieure à celle de la transition vitreuse de l'électrolyte de manière à réduire la conductivité ionique.

L'ajout de solvants aprotiques polaires ou de sel ou des deux après l'assemblage de la pile peut être facilité par l'usage d'au moins un revêtement conducteur composite perméable afin de faciliter l'introduction de ces derniers.

L'opération de découpe peut s'effectuer mécaniquement de façon connu dans l'art au moyen d'outils de poinçonnage (blanking), d'écrasement (crush cutting) ou de cisaillement (score cutting) ou encore la découpe s'effectue avec un outil constitué au moins en partie d'un matériau isolant de façon à minimiser le court-circuit lors de la découpe. La découpe peut aussi s'effectuer en présence d'un lubrifiant inerte ou réactif au lithium. Durant ou après l'opération de découpe, on peut effectuer une réaction chimique du lithium ou du sodium de l'arête découpée de façon à éliminer plus rapidement tout court-circuit et à neutraliser l'activité électrochimique latérale. Cette opération facilite le phénomène d'auto-cicatrisation mentionné dans cette invention. La réaction chimique s'effectue normalement en présence de réactifs capables d'oxyder le lithium de l'arête, et qui sont des liquides ou des gaz, notamment l'air, capables de former un composé du lithium isolant électrique, insoluble dans l'électrolyte polymère et pouvant également consolider l'arête. Le composé formé est par exemple à base de carbonates, d'oxyanions, d'oxydes, de chalcogénures, de dérivés du fluor ou d'alcoolates.

De façon optionnel, il est possible de consolider les arêtes de la pile, pour prévenir toute déformation indésirable, par une réaction de polymérisation à l'arête lors de la découpe. La réaction étant catalysée ou amorcée par le métal alcalin fraîchement découpé.

Selon une autre réalisation de l'invention, on replie sur elle-même, en zigzag, une partie de la pile découpée en un nombre impair d'unités de base et l'on termine l'ensemble par des faces ayant des polarités opposées. On peut aussi superposer les piles de façon à effectuer une infinité de montages parallèles et séries par simple empilement, ou on peut mettre les piles découpées individuellement ou par groupe dans un boîtier unique en utilisant les faces externes des piles et des ensembles pour assurer la collection du courant.

L'invention concerne aussi une pile mince à électrolyte polymère constituée par la superposition d'une cathode sous forme de film mince, d'un électrolyte polymère ainsi que d'un feuillard d'anode à base de lithium ou de sodium, caractérisé en ce qu'elle est obtenue par découpe de ladite superposition de façon à ce que ses extrémités après découpe soient uniformément tranchées, qu'optionnelement on retrouve à l'arête un mince film obtenu par la réaction d'un lubrifiant réactif lors de la découpe qui vient consolider et isoler électriquement l'arête, et qu'enfin ladite pile conserve sensiblement le même voltage un fois produite que celui d'une pile-mère utilisée pour sa production par découpe.

D'autres caractéristiques et avantages de l'invention ressortiront d'ailleurs de réalisations préférées illustrées dans les dessins annexés, donnés à titre purement illustratif mais sans caractère limitatif, et dans lesquels,

la FIGURE 1 est un schéma illustratif d'un procédé de fabrication de la pile laminée-mère et de la découpe des piles selon l'invention;

la FIGURE 2(a) est un schéma illustratif en coupe d'un exemple de pile découpée mécaniquement à l'emporte-pièce;

la FIGURE 2(b) est un schéma illustratif en coupe d'un autre exemple de pile découpée mécaniquement à l'emporte-pièce;

la FIGURE 2(c) est un shéma illustratif en coupe d'un troisième exemple de pile découpée mécaniquement à l'emporte-pièce;

la FIGURE 3(a) est une vue en coupe d'une pile selon l'invention assemblée en parallèle et obtenue par pliage en zigzag;

la FIGURE 3(b) est une vue en coupe d'une pile assemblée en série obtenue par la superposition de piles individuelles selon l'invention;
la FIGURE 3(c) est une vue en coupe d'une autre pile assemblée en série, mais cette fois obtenue par la superposition de piles parallèles selon la FIGURE 3(a);
la FIGURE 4 est un schéma illustratif d'un procédé de fabrication du Li° et de son revêtement de nickel;
la FIGURE 5 est un schéma illustratif d'un exemple de procédé de laminage de la pile laminée-mère;
la FIGURE 6 est un schéma illustratif en coupe du procédé de découpe à l'emporte-pièce de piles selon l'invention;
la FIGURE 7 est un schéma illustratif en coupe du procédé de découpe de piles en bandelettes selon l'invention;
la FIGURE 8 est un schéma illustratif et en plan d'une pile laminée-mère après découpe d'une part à remporte-pièce et d'autre part au couteau rotatif et respectivement de petites piles et de bandelettes selon l'invention;
la FIGURE 9(a) est une vue en coupe d'une pile selon la FIGURE 3(b) emballée et à voltage multiple;
la FIGURE 9(b) est une vue en coupe d'une pile selon la FIGURE 3(a) emballée et à voltage unitaire; et
la FIGURE 10 est une courbe de l'utilisation en pourcent par rapport au nombre de cycles d'une pile découpée mécaniquement à 25°C selon l'invention.

En se référant plus particulièrement à la FIGURE 1, donnée à titre non limitatif, on verra que la production d'une pile laminée de grande surface 1 s'effectue par un procédé en continu tel qu'illustré. On alimente le dispositif de laminage illustré avec un film de polypropylène 3 d'une épaisseur d'environ 20μm préalablement traité par métallisation/placage de nickel en 5 de façon connue dans l'art (brevet U.S. No 5.423.974) et d'une épaisseur inférieure à environ 5μm, de façon à revêtir le film de polypropylène 3 d'une couche pelable de nickel 7 d'une épaisseur de 2μm. On alimente d'autre part le dispositif de laminage avec un film 9 d'une épaisseur entre environ 10 et 30μm comprenant principalement du lithium métallique et destiné à constituer l'anode 11 de la pile laminée-mère de grande surface 1.

On introduit le film de polypropylène 3 revêtu d'une couche pelable de nickel 7, ainsi que le film de lithium 9 dans le laminoir 13 constitué des cylindres 15 et 17 tournant en sens inverse et entre lesquels s'effectuera le laminage Ni°/Li°.

D'autre part, on alimente un second laminoir 19 faisant aussi partie du dispositif de laminage avec un autre film de polypropylène 21 qu'on enduit en 23 de façon connue, d'un film d'électrolyte polymère 25, dont l'épaisseur peut varier entre environ 5 et 30μm, avant de l'introduire dans le laminoir 19 entre les cylindres 27 et 29. On pourrait évidemment tout aussi bien utiliser un électrolyte polymère gélifié sans pour cela sortir du cadre de l'invention.

Un troisième film de polypropylène 31 est simultanément alimenté au laminoir 19, mais préalablement il est revêtu d'une couche de nickel 33 d'une épaisseur inférieure à environ 5μm, par une étape de métallisation/placage bien connue de l'homme de l'art, en 35. Avant son introduction dans le laminoir 19 et après avoir été revêtu de nickel d'une épaisseur de 2μm, le film de polypropylène revêtu de nickel est enduit en 37 d'un film de cathode 39. Le film de polypropylène 31, revêtu de nickel 33 et enduit de la cathode 39 est alors introduit dans le laminoir 19 en même temps que le film de polypropylène 21 enduit d'électrolyte 25. Le produit de laminage Ni°/Li° en 13 et celui constitué du laminé polypropylène - électrolyte - cathode sont introduits dans le laminoir 41 constitué des cylindres 43, 45 et 47, 49, mais préalablement on avait pelé le film de polypropylène 21 en 42. A la sortie du laminoir 41, on pèle le film support 3 en 51, et le film support 31 en 53 et l'on obtient une pile laminée-mère de grande surface dont l'anode est constituée principalement de lithium métallique, le séparateur d'un électrolyte polymère gélifié ou non et la cathode d'un matériau composite lié par un électrolyte polymère gélifié ou non; l'anode est recouverte d'un revêtement conducteur mince inerte au lithium tel que, à titre d'exemple, le nickel métallique; la cathode composite comporte également un revêtement conducteur inerte. Les revêtements conducteurs externes sont choisis minces, préférentiellement inférieurs à 5 μm, de façon à les rendre négligeables vis-à-vis de l'épaisseur de la somme des autres composantes du laminé et de façon à garder l'ensemble souple et facile à manipuler. Ces revêtements conducteurs sont préférentiellement inertes vis-à-vis des électrodes avec lesquelles ils sont en contact pour assurer la qualité des contacts électriques. Par revêtement conducteur inerte on entend des matériaux qui sont chimiquement et électrochimiquement stable avec le matériau actif de l'électrode correspondante. De façon optionnelle, ces revêtements peuvent être plus ou moins adhérents de façon à faciliter le positionnement des piles individuelles ou multiples découpées lors de leur assemblage en générateur complet. Les différentes composantes de la pile laminée sont soudées ensemble mais l'ensemble conserve une certaine flexibilité due à la nature plastique du lithium, de l'électrolyte polymère et des minces revêtements conducteurs. On notera que les opérations de pelages indiquées sur la FIGURE 1 sont effectives avant la découpe et la mise en boîtier de la pile laminée.

La découpe à vif de la pile laminée-mère 1 s'effectue par des moyens mécaniques, schématiquement illustrés en 55, de façon à obtenir des piles de plus petite surface 57. On pourrait aussi produire de façon connue soit des bandelettes transversales à la pile laminée, soit des petits éléments entièrement découpés sur leur périphérie, soit des éléments perforés ou évidés ou de formes variées en fonction des applications visées notamment dans le domaine de la micro-électronique. Au besoin, on attendra un temps minimum pour laisser les piles s'auto-cicatriser complètement et se stabiliser en voltage de façon à pouvoir effectuer un contrôle de qualité de tous les éléments.

Les FIGURES 2(a), 2(b) et 2(c) illustrent l'effet de la coupe sur les bords de la pile qui deviennent inaccessible pour des prises de contact latérales. Seules les faces externes sont alors accessibles pour la prise de contact. Pour faciliter ces contacts, notamment du côté de l'anode (oxydation du Li°), on utilise un mince revêtement conducteur inerte qui assure la qualité du contact électrique et isole physiquement le matériau d'électrode des autres piles ou du matériau d'emballage. De façon non limitative, deux types de revêtements sont illustrés aux FIGURES 2(a), 2(b) et 2 (c). Un revêtement métallique mince, dans ce cas un nickel de 2 μm d'épaisseur, et deux exemples de revêtements composites; l'un constitué de carbone et d'un liant inerte et non-conducteur stable en oxydation tel que l'EPDM, le PVDF ou le PVDF-HFP et utilisé à la cathode; l'autre constitué d'une poudre de nitrure de bore conducteur métallique et d'un liant stable en réduction tel que l'EPDM et utilisé à l'anode. Divers composés inertes au lithium et conducteurs peuvent satisfaire ces deux critères, notamment, à titre d'exemple, les carbures, nitrures et borures métalliques. Par composés inertes au lithium on entend des matériaux qui sont chimiquement et électrochimiquement stable face au lithium. Dans certains cas, il est préférable de limiter la conductivité latérale de la composite positive et de son revêtement composite conducteur de façon à limiter le courant de court-circuit temporaire à la découpe, notamment dans le laminé-mère de grande surface afin de préserver l'état de charge et pour des raisons de sécurité lorsque les piles ainsi découpées sont optimisées pour les fortes puissances de décharge.

Les FIGURES 3(a), 3(b) et 3(c) illustrent respectivement l'assemblage lorsque requis des piles individuelles en parallèle 59, en zigzag obtenu par pliage après découpe, ou en série, par la superposition des piles, individuelles 61 ou montées en parallèle 63 afin d'augmenter le voltage. Les revêtements conducteurs des électrodes assurent les contacts électriques entre les unités, tel qu'illustré, à titre d'exemple, aux FIGURES 3(a), 3(b) et 3(c).

La mise en boîtier unique des piles ou des ensembles de piles série/parallèle est rendue possible par le fait que toutes les composantes sont à l'état solide ou sans excès de solvant, pour les systèmes gélifiés, ce qui évite les effets de corrosion locale notamment pour les montages en série. Le scellement de l'ensemble électrochimique et des matériaux d'emballage s'effectue en utilisant au besoin les matériaux métallique barrière comme collecteur de l'ensemble du dispositif électrochimique. De façon optionnelle, on prendra profit de l'adhésion des revêtements conducteurs des électrodes pour assurer le positionnement de la ou des piles dans le boîtier.

En se référant aux FIGURES 4 à 9, on verra plus particulièrement en FIGURE 4, la façon de réaliser un revêtement conducteur de nickel adhérent sur un mince feuillard de lithium, l'ensemble étant obtenu par laminage d'un feuillard de lithium supporté sur plastique tel que décris dans les brevets U.S. Nos 5.423.974 et 5.521.028 avec un feuillard de nickel mince de 2 μm supporté sur un support plastique pelable.

La façon d'obtenir la pile laminée en continu à partir d'une demi-pile: Cathode/Electrolyte polymère par transfert est illustrée en FIGURE 5.

La façon de découper des piles de petite surface à partir de la pile laminée à l'aide d'un emporte-pièce est illustrée en FIGURE 6.

La façon de découper des piles en bandelettes à partir de la pile laminée à l'aide d'un couteau rotatif est illustrée en FIGURE 7.

Des exemples de formats de piles découpées d'une part à l'emporte pière ou d'autre part au couteau rotatif à partir du laminé-mère sont illustrées en FIGURE 8.

La façon d'empiler en série des piles unitaires ou en zigzag lorsque l'on veut développer une surface effective supérieure à celle de la pile emballée et un voltage multiple d'une cellule unitaire est illustrée en FIGURES 8 et 9.

Des exemples de piles emballées à voltage unitaire et à voltage multiple sont illustrés en FIGURE 9.

Le matériau actif de la cathode peut être choisi parmi l'oxyde de cobalt, l'oxyde de nickel, l'oxyde de nickel cobalt, l'oxyde de nickel cobalt aluminium, l'oxyde de manganèse ($LiMn_2O_4$) ou leurs analogues pour les cathodes dites à 4V ou encore parmi les cathodes de moins de 4V comme les phosphates ou autre polyanions de métaux de transition tel que $LiFePO_4$, les structures Nasicons incluant également le $V_2O_5$, $LiV_3O_8$ et le $MnO_2$, les chalcogénures, les oxocarbonates tel le rhodizonate et les halogénures tel les carbones monofluorés $(CF)_n$. La nature du matériau actif à la cathode n'est pas une limitation de la présente invention.

La composante électrolytique peut être constitué, soit d'un copolymère de l'oxyde d'éthylène tel que décrit dans les brevets U.S. Nos 4.578.326 et 4.758.483 dans lequel au moins un sel alcalin est dissous et qui contient ou non un ou des solvants aprotiques polaires, soit d'un gel formé de polymères peu solvatant des sels de lithium ou peu conducteur intrinsèque en présence de sels mais comportant des hétéroatomes tels que le fluor ou des groupements polaires tel que les nitriles, les sulfonates, les fluorométhanes, qui les rendent miscibles avec un ou des solvants organiques aprotiques polaires. Ces derniers confèrent alors au gel des propriétés solvatantes des sels de lithium de façon à leur conférer un rôle de composante électrolytique. Les principaux polymères peu solvatant peuvent être, à titre d'exemple non limitatif, les PVDF ou leur copolymères, les polyacrylonitriles et les polyélectrolytes comportant des groupements sulfonates ou fluorosulfonates ou leurs équivalents. La nature de la composante électrolytique n'est pas une limitation de la présente invention.

La cathode peut également contenir un liant inerte face au matériau d'électrode et au solvant aprotique polaire comme par exemple, à titre non limitatif, l'EPDM. La nature du liant de la cathode n'est pas une limitation de la présente invention.

Le matériau actif de l'anode peut être choisi parmi le lithium métal, le sodium métallique ou un alliage de ces derniers. Par alliage on entend un mélange contenant une fraction majoritaire de ces métaux alcalins avec une ou plusieurs autres composantes de sorte que, lors de la découpe, la réaction chimique ou électrochimique du métal alcalin avec la cathode soit suffisante pour permettre l'auto-cicatrisation. La composition exacte de l'anode de lithium ou de sodium n'est pas une limitation de la présente invention.

Le ou les sels alcalins peuvent être des sels de lithium, de sodium, de potassium ou autres comme par exemple les sels à bases de trifluorométhanesulfonimide de lithium décris dans le brevet U.S. No 4.505.997, les sels de lithium dérivés du bisperhalogénoacyl ou sulfonylimide réticulables ou non décrits dans le brevet U.S. No 4.818.644 et dans le PCT WO92/02966, le $LiPF_6$, le $LiBF_4$, le $LiSO_3CF_3$, le $LiClO_4$, le LiSCN, NaSCN, $NaClO_4$, le KSCN et le $KClO_4$, etc. La nature du sel n'est pas une limitation de la présente invention.

Pour un système gélifié, le ou les solvants aprotiques polaires peuvent être choisis à titre d'exemple parmi le carbonate de propylène, le carbonate d'éthylène, l'éthyle méthyle carbonate, le diméthyle carbonate, le diéthyle carbonate, le tétrahydrofuranne, le 2-méthyltétrahy drofuranne, le 1,3-dioxolanne, le 2,2-diméthyl-1,3-dioxolanne, le γ-butyrolactone, le carbonate de butylène, le sulfolane, le 3-méthylsulfolane, le ter-bytyl-éther, le 1,2-diméthoxyéthane, le 1,2-diéthoxyéthane, le bis(méthoxyéthyl)éther, le 1,2-éthoxyméthoxyéthane, le terbutylméthyléther, les glymes et sulfamides de formule: $R_1R_2N\text{-}SO_2\text{-}NR_3R_4$, dans laquelle $R_1$, $R_2$, $R_3$ et $R_4$ sont des alkyls comprenant entre 1 et 6 carbones ou/et des oxyalkyls comprenant entre 1 et 6 atomes de carbone, La nature du solvant n'est pas une limitation de la présente invention.

LES AVANTAGES DE L'INVENTION:

Les avantages de l'invention sont multiples tant sur le plan de la simplification des procédés de fabrication que de l'optimisation des performances électrochimiques et des designs obtenus:

- L'invention utilise une pile laminée-mère produite en bande continue par des procédés d'enduction et de transfert qui ne nécessitent pas de zone particulière pour faciliter la découpe: zones masquées, enduction de motif d'électrode et d'électrolyte, transfert d'éléments discontinus tels que des feuillards de lithium, ni de zones en retrait sur le collecteur dans le cas ou ce dernier sert également de matériau d'emballage et de support au scellement. La production de la pile-mère est donc simple et rapide et ne cause pas un taux de rejet important à la découpe,
- L'usage de revêtements conducteurs électroniques, minces et inertes chimiquement vis-à-vis des électrodes, permet d'optimiser l'énergie massique et volumique malgré la superposition de ces derniers lorsque les piles sont pliées en zigzag, facilite l'opération de découpe et sépare physiquement les électrodes réactives des parois de l'emballage tout en permettant des contacts électriques stables en fonction du temps.
- Les propriétés d'auto-cicatrisation (de self-healing) du lithium démontrées dans cette invention permettent une production rapide des piles ayant la forme désirée par découpe mécanique de la pile laminée-mère avec un taux de rejet très faible ou nul. La fiabilité du processus en jeu est telle que l'on peut ainsi fabriquer des piles qui sont rechargeables. On démontre en plus la possibilité de neutraliser complètement la zone de découpe par réaction chimique du lithium de l'arête découpée avec des gaz ou solvants réactifs au lithium. On démontre également la possibilité de consolider l'arête lors de la réaction chimique du lithium.
- L'usage de support plastique temporaire et pelable lors de la préparation des électrodes utilisées au départ pour la fabrication de la pile-mère laminée facilite la manipulation de la pile laminée jusqu'à l'opération de découpe et de mise en boîtier.
- La combinaison des propriétés de flexibilité de la pile découpée, de l'état solide de l'électrolyte et de la minceur des revêtements conducteurs permet de fabriquer dans un même boîtier une infinité de combinaisons parallèle-série et de développer la surface en jeu et le voltage de l'ensemble pour adapter les performances du générateur à un grand nombre d'applications à partir d'une pile laminée-mère unique.
- Pour les piles primaires composées de dioxyde de manganèse ($MnO_2$), la faible décharge résultant de la découpe mécanique permet d'éliminer ou de réduire l'étape de décharge de 2 à 10% normalement effectuée afin d'augmenter la durée d'entreposage de ce type de pile tel que décris dans le brevet U.S. No 4.328.288.

EXEMPLES

L'invention va maintenant être illustrée par les exemples non-limitatifs qui suivent

Exemple 1

A partir d'un laminé tel qu'illustré à la FIGURE 5 on prélève 12 piles de forme circulaires à partir d'un emporte-pièce de laboratoire. La manipulation a été effectuée en boîte-à-gants sous atmosphère inerte d'argon. L'humidité relative était inférieure à lppm et le taux en oxygène inférieur à 10ppm. Le laminé comprend les éléments suivants:

Ni° (2μm)/Li° (24μm)/Electrolyte polymère (30μm)/Cathode composite (45μm)/A1 (13μm).

Le laminé de départ est obtenu par enduction en continu de la cathode sur son collecteur et de l'électrolyte sur un support pelable suivi d'un transfert à chaud de l'électrolyte sur la cathode et pelage du support temporaire; on transfère ensuite l'anode de lithium avec son collecteur de nickel tel qu'obtenu à la FIGURE 4. La cathode composite comprend de l'oxyde de vanadium, du noir de carbone et de l'électrolyte polymère comme liant. L'électrolyte polymère qui sert aussi de séparateur est constitué d'un copolymère de l'oxyde d'éthylène dans lequel un sel de lithium, le $(CF_3SO_2)_2NLi$, est dissous dans un rapport O/Li de 30/1. Les brevets copolymères U.S. Nos 4.578.326 et 4.758.483 décrivent des exemples non-limitatifs de copolymères qui peuvent être utilisés pour le procédé de l'invention. Ces copolymères peuvent être réticulés au besoin par les moyens connus de l'homme de l'art.

Les valeurs obtenues après découpe à 25°C sous atmosphère inerte des 12 piles sont rapportées au TABLEAU I. On peut constater que le taux de rejet est très faibles et que les piles maintenues à la température ambiante possèdent un voltage très similaire à celui du laminé de départ. Le laminémère possède également un potentiel supérieur à 3,3 volts après découpe (TABLEAU 1) indiquant qu'elle a également récupéré, par un phénomène d'auto-cicatrisation. A la FIGURE 10, la courbe de cyclage de la première pile découpée est utilisée afin d'illustrer la valeur du procédé de découpe/cicatrisation de l'invention en soumettant la pile de 7.7 C/cm$^2$ et de 6.5 cm$^2$ de surface à un cyclage répétitif à 60°C à courant constant et entre les limites de 3.3 et 1.5 volts. Ce test de cyclage sous atmosphère inerte peut être considéré comme un test extrême pour déceler les points faibles engendrés par la découpe mécanique et qui se révéleraient lors des cycles successifs de décharge/charge.

Le comportement en cyclage est en tout point identique au comportement en cyclage du laminé de départ non-découpé à vif lorsque représenté proportionnellement par unité de surface. Seul un phénomène s'auto-cicatrisation résultant d'une dissolution électrochimique du lithium lorsque mis en contact avec l'électrode positive permet d'expliquer un tel résultat.

TABLEAU I

| Numéro de la pile découpée sous atmosphère inerte | Voltage de la pile après découpe (volts) | Voltage de la pile 1 heure après découpe (volts) |
|---|---|---|
| 1 | 3,156 | 3,410 |
| 2 | 3,202 | 3,341 |
| 3 | 3,405 | 3,433 |
| 4 | 0,001 | 3,016 |
| 5 | 3, 407 | 3,445 |
| 6 | 3,109 | 3,331 |
| 7 | 3,387 | 3,405 |
| 8 | 3,201 | 3,295 |
| 9 | 0,003 | 3,105 |
| 10 | 2,797 | 3,204 |
| 11 | 3,388 | 3,424 |
| 12 | 3,316 | 3,410 |
| laminé mère | 2,697 | 3,322 |

Exemple 2

On reproduit l'exemple 1, en remplaçant cette fois-ci la cathode par un second film de lithium. Le laminé ainsi produit comporte les éléments suivant :

Ni°(2μm)/Li°(24μm)/Electrolyte polymère (20μm)/Li°(24μm)/Ni°(2μm)

Avant la découpe, une mesure d'impédance montre une résistance d'interface de 30 Ω/cm$^2$ pour la pile la-

minée-mère. De ce laminé, on prélève en boîte-à-gants sous atmosphère d'argon cinq piles de forme circulaire à l'aide d'un emporte-pièce. Une mesure d'impédance de chacune de ces piles aussitôt la découpe montre que la pile est en court-circuit. Après 24 heures, une seconde mesure d'impédance est réalisée, les cinq piles sont toujours en court-circuit démontrant que la pile ne peut s'auto-cicatriser sans une réaction du lithium avec la composante active de la cathode. Sous atmosphère inerte, l'absence d'un réactif au lithium ne permet pas de cicatrisation à l'arête. Une pile est par la suite traitée à l'aide d'une solution d'alcool éthylique afin de cicatriser l'arête. Après ce traitement, une mesure d'impédance est effectué montrant que le court-circuit est éliminé, la pile possède alors une impédance similaire à celle obtenue pour la pile laminée-mère.

Exemple 3

A partir des éléments illustrés aux FIGURES 4 à 6 on découpe à l'emporte-pièce 24 piles individuelles de forme rectangulaires dont on contrôle le voltage de chacune. Les manipulation ont eu lieu en chambre anhydre ayant une humidité relative de 120 ppm. Les valeurs trouvées pour les piles sont rapportés au TABLEAU II. Deux cas sont étudiés, dans le premier, on effectue la découpe à la température ambiante (TABLEAU II, piles 1 à 12); dans le second cas, on refroidit au préalable la pile laminée à l'azote liquide avant de l'introduire dans l'emporte-pièce (TABLEAU II, piles 13 à 24), de façon à durcir l'électrolyte à une température inférieure à celle de sa transition vitreuse et par le fait même réduire la conductivité ionique durant l'opération de découpe Les résultats sont sensiblement les mêmes dans les deux cas. On note cependant que pour les piles manipulées à froid (TABLEAU II, piles 13 à 24), aucun court-circuit franc n'a été observé. On peut constater que le taux de rejet est très faible et que les piles maintenues à la température ambiante possèdent un voltage très similaire à celui du laminé de départ. Le laminé comprend les éléments suivants:

Ni° (2µm)/Li° (24µm)/Electrolyte polymère (15µm)/Cathode composite (40µm)/A1 (13µm).

La cathode composite comprend de l'oxyde de vanadium, du noir de carbone et de l'électrolyte polymère comme liant. L'électrolyte polymère qui sert aussi de séparateur est constitué d'un copolymère de l'oxyde d'éthylène dans lequel un sel de lithium, le $(CF_3SO_2)_2NLi$, est dissous dans un rapport O/Li de 30/1. Les brevets copolymères U. S. Nos 4.578.326 et 4.758.483 décrivent des exemples non-limitatifs de copolymères qui peuvent être utilisés pour le procédé de l'invention. Ces copolymères peuvent être réticulés au besoin par les moyens connus de l'homme de l'art.

Lorsqu'une pile est accidentellement mise en court-circuit, on constate que cette pile récupère sensiblement son voltage initial dans les secondes qui suivent. La découpe s'effectuant en condition anhydre, cette récupération du voltage s'explique principalement par un phénomène d'auto-cicatrisation du lithium qui semble résulter de la dissolution électrochimique de ce dernier lorsque mis en contact avec l'électrode positive.

TABLEAU II

| Numéro de la pile découpée sous atmosphère anhydre | Voltage de la pile après découpe (volts) | Voltage de la pile 1 heure après découpe (volts) |
|---|---|---|
| 1 | 3,269 | 3,390 |
| 2 | 0,002 | 3,034 |
| 3 | 3,411 | 3,432 |
| 4 | 3,425 | 3,446 |
| 5 | 3,340 | 3,385 |
| 6 | 3,409 | 3,431 |
| 7 | 3,407 | 3,435 |
| 8 | 0,001 | 3,215 |
| 9 | 2,703 | 3,137 |
| 10 | 3,397 | 3,410 |
| 11 | 0,000 | 3,144 |
| 12 | 3,387 | 3,422 |
| 13 | 2,613 | 2,934 |
| 14 | 3,396 | 3,420 |
| 15 | 3,356 | 3,387 |

TABLEAU II (suite)

| Numéro de la pile découpée sous atmosphère anhydre | Voltage de la pile après découpe (volts) | Voltage de la pile 1 heure après découpe (volts) |
|---|---|---|
| 16 | 3,374 | 3,415 |
| 17 | 3,414 | 3,439 |
| 18 | 3,328 | 3,382 |
| 19 | 2,760 | 3,251 |
| 20 | 3,321 | 3,378 |
| 21 | 2,807 | 3,278 |
| 22 | 2,733 | 3,259 |
| 23 | 3,301 | 3,254 |
| 24 | 2,788 | 3,297 |

Exemple 4

On reproduit l'exemple 3 en chambre anhydre en utilisant cette fois-ci un électrolyte polymère gélifié obtenu par irradiation par faisceau d'électron, EB, à une dose de 5 Mrad. L'électrolyte est composé volumiquement de 50% de glycérol-tri[poly(oxyéthylène)(oxypropylène)] triacrylate et de 50% d'un mélange de solvant aprotique polaire salé constitué d'éthyle méthyle carbonate et d'éthylène carbonate (dans un rapport volumique 1:1) et de l'hexafluorophosphate de lithium à une concentration de 1 molaire (disponible chez Tomiyama). L'électrolyte polymère gélifié obtenu présente une bonne conductivité ionique à 25°C et des propriétés mécanique suffisante pour servir de séparateur dans la pile.

Les résultats obtenus sont sensiblement identiques à ceux de l'exemple précédent, malgré la présence d'un solvant liquide. La présence du solvant doit faciliter la cicatrisation à l'arête.

Exemple 5

A partir d'un laminé tel que décrit à l'exemple 1, on prélève sous atmosphère inerte cinq piles de forme circulaire à partir d'un emporte-pièce de laboratoire. Le laminé comprend les éléments suivants:

Ni° (2µm)/Li° (24µm)/Electrolyte polymère (30µm)/Cathode composite (45µm)/A1 (13µm).

Au moment de la découpe la tranche de l'emporte-pièce est lubrifié avec de l'alcool éthylique ce dernier venant oxyder rapidement le lithium de l'arête de la pile en un composé non conducteur électronique. Les valeurs de voltage obtenus pour les cinq piles découpées sont sensiblement les mêmes et voisines de 3.34 volts

L'alcool éthylique est utilisé dans le présent exemple, mais d'autres liquides ou gaz réactifs peuvent également être utilisés selon la nature du composé de lithium oxydé que l'on désire obtenir pour assurer le bon fonctionnement du générateur.

Exemple 6

Le présent exemple concerne une découpe de deux piles identiques à celles décrient à l'exemple 5 à l'exception que la tranche de l'emporte-pièce est lubrifié par une solution de toluène contenant volumiquement 40% d'un mélange de monomères constitué à 40% de pentaérythritol tétraacrylate et à 60% de méthyle méthacrylate (disponible chez Polysciences). Au moment de la découpe, l'exposition du lithium métallique à ladite solution amorce une réaction de polymérisation qui forme un film mince, dur et isolant électrique venant consolider mécaniquement l'arête de la pile. Les deux piles présentent après la découpe un voltage de 3,33 volts.

La consolidation de l'arête a été démontré à partir d'un test mécanique de pénétration. Le dispositif de mesure est constitué d'une pointe de 7mm de diamètre sous une poussée de 240 g. Pour chacune des piles dont l'épaisseur total est de 114 µm, une première mesure de pénétration fut prise au centre de la pile et une seconde mesure sur l'arête. Le TABLEAU III montre les variations de pénétration en pourcent observées lors de ce test.

TABLEAU III

| | Pénétration au centre de la pile | Pénétration à l'arête de la pile |
|---|---|---|
| Pile 1 | 10% | 8% |
| Pile 2 | 10% | 7% |

**Revendications**

1. Procédé de fabrication de piles minces à électrolyte polymère et à anode à base de lithium ou de sodium métallique, à partir d'une pile-mère laminée de grande surface comportant un feuillard d'anode à base de lithium ou de sodium, un électrolyte polymère, ainsi qu'une cathode sous forme de film mince, **caractérisé en ce que** ladite cathode a la propriété de dissoudre le lithium ou le sodium, et on effectue une découpe mécanique à vif de ladite pile-mère, en sorte de mettre en jeu un phénomène d'auto-cicatrisation.

2. Procédé selon la revendication 1, **caractérisé en ce que** l'auto-cicatrisation résulte en une dissolution chimique dans ladite cathode de tout lithium ou sodium ayant été en contact avec la cathode au cours de la découpe.

3. Procédé selon la revendication 1, **caractérisé en ce que** l'anode est à base de lithium métallique.

4. Procédé selon la revendication 1, **caractérisé en ce que** l'électrolyte polymère est conducteur des ions alcalins de l'anode et agit egalement comme separateur entre l'anode et la cathode.

5. Procédé selon la revendication 1, **caractérisé en ce que** la pile-mère comporte une cathode composite constituée d'un composé réductible au lithium ou au sodium, d'un additif de conduction électronique et d'un liant électrolyte polymère.

6. Procédé selon la revendication 1, **caractérisé en ce que** l'on prévoit un revêtement conducteur électronique mince sur la face externe de l'anode et éventuellement de la cathode, dont le matériau conducteur est chimiquement inerte vis-à-vis du matériau d'électrode et sert egalement à établir des contacts électriques permanents sur les faces externes des piles découpées.

7. Procédé selon la revendication 1, **caractérisé en ce que** la pile-mère est obtenue à partir de films continus d'anode, de cathode et d'électrolyte polymère, lesquels sont assemblés par des procédés d'enduction et de transfert de films, lesdits films étant adhérents entre eux.

8. Procédé selon la revendication 1, **caractérisé en ce que** l'on empile les piles minces obtenues, en parallèle ou en série.

9. Procédé selon la revendication 8, **caractérisé en ce qu'**on empile les piles, après leur pliage en zigzag.

10. Procédé selon la revendication 1 ou 8, **caractérisé en ce que** l'on met dans un emballage constitue par un boitier unique, les piles minces individuelles ou empilées, en parallèle ou en série.

11. Procédé selon la revendication 10, **caractérisé en ce que** la prise de contact des piles minces est constitue des faces externes des piles individuelles ou assemblées.

12. Procédé selon la revendication 6, **caractérisé en ce que** l'épaisseur du revêtement conducteur de l'anode, est inférieure à 5 micromètres de façon à minimiser le poids et le volume et à conserver la flexibilité de l'ensemble de la pile mince.

13. Procédé selon la revendication 6, **caractérisé en ce que** le revêtement conducteur est un mince feuillard métallique à base de nickel ou de fer.

14. Procédé selon la revendication 6, **caractérisé en ce que** le revêtement conducteur est un composite comportant un liant polymère inerte et une charge conductrice électronique dispersée et inerte vis-à-vis du matériau d'électrode, le revêtement conducteur étant stable face aux matériaux actifs de l'electrode correspondante.

**15.** Procédé selon la revendication 14, **caractérisé en ce que** la charge conductrice est une poudre conductrice inerte au lithium, comprenant des nitrures, carbures et borures métalliques.

**16.** Procédé selon la revendication 14, **caractérisé en ce que** la charge conductrice comprend du carbone dans le cas du revêtement conducteur de la cathode.

**17.** Procédé selon la revendication 14, **caractérisé en ce que** le liant polymère inerte est non conducteur ionique, et comprend des motifs monomères éthylène et propylène, dont le polyéthylène, le polypropylène ou le EPDM ou des motifs monomères uréthane, dont le polyuréthane.

**18.** Procédé selon la revendication 14, **caractérisé en ce que** le liant polymère inerte est non conducteur ionique, et est constitué de prépolymère réticulable.

**19.** Procédé selon la revendication 18, **caractérisé en ce que** le prépolymère possède des groupements fonctionnels reticulables tels que les acrylates, les méthacrylates, les allyles ou les vinyles.

**20.** Procédé selon la revendication 17, **caractérisé en ce que** dans le cas de la cathode, le liant polymère inerte comprend également des motifs fluorés dont le PVDF et ses copolymères.

**21.** Procédé selon une des revendications 14 à 20, **caractérisé en ce que** le liant polymère inerte est un adhésif de façon à faciliter le positionnement des piles et la qualité des contacts électriques.

**22.** Procédé selon la revendication 21, **caractérisé en ce que** le liant polymère inerte est un thermo-adhésif

**23.** Procédé selon la revendication 13, **caractérisé en ce que** le revêtement conducteur composite possède une résistance de surface variant entre 0,1 et 1000 $\Omega/cm^2$, de façon à limiter un courant de court-circuit lors de la découpe, pour des raisons de maintien de l'état de charge et pour la sécurite des opérations de découpe.

**24.** Procédé selon la revendication 23, **caractérisé en ce que** la résistance de surface varie entre 1 et 300 $\Omega/cm^2$.

**25.** Procédé selon la revendication 1, **caractérisé en ce que** la pile-mère laminée comporte un film de support pelable sur au moins une de ses faces, de façon à faciliter sa production et sa manipulation.

**26.** Procédé selon la revendication 25, **caractérisé en ce que** le film support pelable est constitué principalement de polypropylène ou de polyéthylène.

**27.** Procédé selon la revendication 25, **caractérisé en ce que** l'on enlève le support pelable juste avant l'opération de découpe des piles.

**28.** Procédé selon la revendication 1, **caractérisé en ce que** l'on obtient la pile-mère laminée par des procédés d'enduction et de transfert et qu'il comprend des étapes de réticulation avant ou après le transfert des films.

**29.** Procédé selon la revendication 4, **caractérisé en ce que** l'électrolyte polymère du séparateur est constitué d'un produit ayant une masse moléculaire supérieure à 50 000, de façon à obtenir des films manipulables et transférables par des procédés de laminage en continu.

**30.** Procédé selon la revendication 1, **caractérisé en ce que** l'on effectue la gélification de l'électrolyte polymère par l'addition de solvants liquides aprotiques polaires, de façon à optimiser la conductivité ionique à la température ambiante.

**31.** Procédé selon la revendication 1, **caractérisé en ce que** la pile laminée-mère est refroidie, avant la découpe, à une température inférieure à celle de la transition vitreuse de l'électrolyte, de manière à réduire la conductivité ionique durant l'opération de découpe.

**32.** Procédé selon la revendication 1, **caractérisé en ce que** l'électrolyte polymère est constitué d'une matrice polymérique et qu'on rend cette dernière conductrice par l'ajout d'un sel de métal alcalin soluble dans l'électrolyte.

**33.** Procédé selon la revendication 1, **caractérisé en ce que** l'électrolyte polymère est constitué d'une matrice polymérique et qu'on rend cette dernière conductrice par l'ajout d'au moins un solvant aprotique polaire.

**34.** Procédé selon la revendication 33 , **caractérisé en ce que** l'addition d'un solvant liquide aprotique polaire est faite après l'opération de découpe de façon à minimiser le courant de court-circuit lors de la découpe.

**35.** Procédé selon la revendication 1 ou 30, **caractérisé en ce que** l'on ajoute un sel alcalin après l'opération de découpe de façon à minimiser le courant de court-circuit

**36.** Procédé selon l'une des revendications 30, 32, 35, **caractérisé en ce que** l'ajout de solvants aprotiques polaires ou de sel, ou des deux, est facilité par l'usage d'au moins un revêtement conducteur composite perméable afin de faciliter l'introduction de ces derniers.

**37.** Procédé selon la revendication 1, **caracterisé en ce que** l'on effectue l'opération de découpe mécaniquement au moyen d'outils de poinçonnage *(blanking),* d'écrasement *(crush cutting)* ou de cisaillement *(score cutting).*

**38.** Procédé selon la revendication 37, **caractérisé en ce que** la découpe s'effectue en présence d'un lubrifiant inerte ou réactif.

**39.** Procédé selon la revendication 1, **caractérisé en ce que** durant ou après l'opération de découpe, on effectue une réaction chimique du lithium ou du sodium, présent sur l'arête découpée, de façon à éliminer tout court-circuit et à neutraliser l'activité électrochimique latérale.

**40.** Procédé selon la revendication 39, **caractérisé en ce que** la réaction chimique s'effectue en presence de réactifs capables d'oxyder le lithium, présent sur l'arête, et qui sont des liquides ou des gaz capables de former un composé du lithium isolant électrique et insoluble dans l'électrolyte polymère.

**41.** Procédé selon la revendication 40, **caractérisé en ce que** le réactif est constitué par de l'air.

**42.** Procédé selon la revendication 40, **caractérisé en ce que** le composé formé est à base de carbonates, d'oxyanions, d'oxydes, de chalchogénures, de dérivés fluorés ou d'alcoolates.

**43.** Procédé selon la revendication 9, **caractérisé en ce que** l'on superpose un nombre impair d'unités de base de piles découpées puis pliées en zigzag, et l'on termine l'ensemble par des faces externes ayant des polarités opposées.

**44.** Procédé selon la revendication 43, **caractérisé en ce que** l'on superpose les piles de façon à effectuer une infinité de montages en parallèle et en séries par simple empilement.

**45.** Procédé selon la revendication 1, **caractérisé en ce que** l'on met les piles découpées individuellement ou par groupe dans un boîtier unique, en utilisant les faces externes des piles et des ensembles pour assurer la collection du courant.

**46.** Procédé selon la revendication 10, **caractérisé en ce que** l'on consolide les arêtes de la pile découpée par oxydation du lithium et formation d'un sel non conducteur, de façon à prevenir toute déformation indésirable.

**47.** Procédé selon la revendication 46, **caractérisé en ce que** l'on consolide l'arête par une réaction de polymérisation amorcé par le lithium fraîchement découpé.

**48.** Pile susceptible d'être obtenue par un procédé selon l'une quelconque des revendications 1 à 47.

## Claims

**1.** Process for manufacturing thin polymer-electrolyte cells with a metallic lithium- or sodium-based anode, from a large-area laminated mother-cell containing a lithium- or sodium-based anode sheet, a polymer electrolyte and a cathode in the form of thin film, **characterized in that** said cathode has the property of dissolving lithium or sodium, and said mother-cell is subjected to a sharp mechanical cutting-out operation in a manner which involves a self-healing phenomenon.

**2.** Process according to Claim 1, **characterized in that** self-healing results in a chemical dissolution in said cathode of any lithium or sodium that has been in contact with the cathode during the cutting-out operation.

**3.** Process according to Claim 1, **characterized in that** the anode is based on lithium metal.

**4.** Process according to Claim 1, **characterized in that** the polymer electrolyte is conductive towards alkaline ions of the anode and also acts as a separator between the anode and the cathode.

**5.** Process according to Claim 1, **characterized in that** the mother-cell includes a composite cathode consisting of a compound which can be reduced to lithium or sodium, an electronically conductive additive and a polymer-electrolyte binder.

**6.** Process according to Claim 1, **characterized in that** a thin electronically conductive coating is provided on the external face of the anode and optionally of the cathode, in which the conductive material is chemically inert with respect to the electrode material and also serves to establish permanent electrical contacts on the external faces of the cut-out cells.

**7.** Process according to Claim 1, **characterized in that** the mother-cell is obtained from continuous films of anode, cathode and polymer electrolyte, which are assembled by film coating and transfer processes, said films adhering to one another.

**8.** Process according to Claim 1, **characterized in that** the thin cells obtained are stacked in parallel or in series.

**9.** Process according to Claim 8, **characterized in that** the cells are folded in a zigzag and then stacked.

**10.** Process according to Claim 1 or 8, **characterized in that** the individual thin cells or thin cells stacked in parallel or in series are placed in a package consisting of a single case.

**11.** Process according to Claim 10, **characterized in that** the connection of the thin cells consists of the external faces of the individual or assembled cells.

**12.** Process according to Claim 6, **characterized in that** the thickness of the conductive coating of the anode is less than 5 micrometres so as to minimize the weight and the volume and to preserve the flexibility of the thin cell assembly.

**13.** Process according to Claim 6, **characterized in that** the conductive coating is a thin nickel- or iron-based metallic sheet.

**14.** Process according to Claim 6, **characterized in that** the conductive coating is a composite including an inert polymer binder and an electronically conductive dispersed filler which is inert with respect to the electrode material, the conductive coating being stable towards the active materials of the corresponding electrode.

**15.** Process according to Claim 14, **characterized in that** the conductive filler is a conductive powder which is inert towards lithium and comprises metallic nitrides, carbides and borides.

**16.** Process according to Claim 14, **characterized in that** the conductive filler comprises carbon when conductively coating the cathode.

**17.** Process according to Claim 14, **characterized in that** the inert polymer binder is a nonionic conductor and comprises ethylene and propylene monomer units, including polyethylene, polypropylene or EPDM, or monomeric urethane units, including polyurethane.

**18.** Process according to Claim 14, **characterized in that** the inert polymer binder is a nonionic conductor and consists of a crosslinkable prepolymer.

**19.** Process according to Claim 18, **characterized in that** the prepolymer has crosslinkable functional groups such as acrylates, methacrylates, allyls or vinyls.

**20.** Process according to Claim 17, **characterized in that** in the case of the cathode, the inert polymer binder also comprises fluorinated units, including PVDF and copolymers thereof.

**21.** Process according to one of Claims 14 to 20, **characterized in that** the inert polymer binder is an adhesive, so as to facilitate positioning of the cells and the quality of the electrical contacts.

**22.** Process according to Claim 21, **characterized in that** the inert polymer binder comprises a hot-melt adhesive.

**23.** Process according to Claim 13, **characterized in that** the composite conductive coating has a surface resistance varying between 0.1 and 1000 $\Omega/cm^2$ so as to limit' a short-circuit current during the cutting-out operation, for reasons of maintaining the state of charge and for safety of the cutting-out operations.

**24.** Process according to Claim 23, **characterized in that** the surface resistance varies between 1 and 300 $\Omega/cm^2$.

**25.** Process according to Claim 1, **characterized in that** the laminated mother-cell comprises a peelable support film on at least one of its faces so as to facilitate its production and handling.

**26.** Process according to Claim 25, **characterized in that** the peelable support film consists mainly of polypropylene or polyethylene.

**27.** Process according to Claim 25, **characterized in that** the peelable support is removed immediately before the operation of cutting out the cells.

**28.** Process according to Claim 1, **characterized in that** the laminated mother-cell is obtained by coating and transfer processes and that it comprises steps of crosslinking before or after transferring the films.

**29.** Process according to Claim 4, **characterized in that** the polymer electrolyte of the separator consists of a product having a molecular weight of greater than 50,000 so as to obtain films which can be handled and transferred by continuous laminating processes.

**30.** Process according to Claim 1, **characterized in that** gelling of the polymer electrolyte is carried out by adding polar aprotic liquid solvents so as to optimize ionic conductivity at room temperature.

**31.** Process according to Claim 1, **characterized in that** the laminated mother-cell is cooled, before the cutting-out operation, to a temperature below the glass transition temperature of the electrolyte so as to reduce the ionic conductivity during the cutting-out operation.

**32.** Process according to Claim 1, **characterized in that** the polymer electrolyte consists of a polymer matrix and the latter is made conductive by adding an alkali metal salt soluble in the electrolyte.

**33.** Process according to Claim 1, **characterized in that** the polymer electrolyte consists of a polymer matrix and the latter is made conductive by adding at least one polar aprotic solvent.

**34.** Process according to Claim 33, **characterized in that** the addition of a polar aprotic liquid solvent is carried out after the cutting-out operation so as to minimize the short-circuit current during the cutting-out operation.

**35.** Process according to Claim 1 or 30, **characterized in that** an alkali metal salt is added after the cutting-out operation so as to minimize the short-circuit current.

**36.** Process according to one of Claims 30, 32 to 35, **characterized in that** the addition of polar aprotic solvents or of salt, or both, is facilitated by using at least one permeable composite conductive coating in order to facilitate their introduction.

**37.** Process according to Claim 1, **characterized in that** the cutting-out operation is carried out mechanically by means of blanking, crush-cutting or score-cutting tools.

**38.** Process according to Claim 37, **characterized in that** the cutting-out operation is carried out in the presence of an inert or reactive lubricant.

**39.** Process according to Claim 1, **characterized in that** during or after the cutting-out operation, lithium or sodium present at the cut-out edge is chemically reacted so as to eliminate any short-circuit and to neutralize lateral electrochemical activity.

**40.** Process according to Claim 39, **characterized in that** the chemical reaction is carried out in the presence of reactants which are capable of oxidizing the lithium present at the edge, and which are liquids or gases capable of forming an electrically insulating lithium compound which is insoluble in the polymer electrolyte.

**41.** Process according to Claim 40, **characterized in that** the reactant consists of air.

**42.** Process according to Claim 40, **characterized in that** the compound formed is based on carbonates, oxyanions, oxides, chalcogenides, fluorine derivatives or alcoholates.

**43.** Process according to Claim 9, **characterized in that** an odd number of basic units of cut-out and zigzag-folded cells are superposed and the assembly is terminated by external faces having opposite polarities.

**44.** Process according to Claim 43, **characterized in that** the cells are superposed so as to produce an infinite number of parallel and series assemblies by simiple stacking.

**45.** Process according to Claim 1, **characterized in that** the cells cut out individually or in groups are placed in a single case by using the external faces of the cells and of the assemblies to ensure current collection.

**46.** Process according to Claim 10, **characterized in that** 'the edges of the cut-out cell are consolidated by oxidation of the lithium and formation of a nonconductive salt so as to prevent any undesirable deformation.

**47.** Process according to Claim 46, **characterized in that** the edge is consolidated by a polymerization reaction initiated by the freshly cut lithium.

**48.** Battery which can be obtained by a process according to any one of Claims 1 to 47.

**Patentansprüche**

**1.** Verfahren zur Herstellung von Dünnschichtzellen mit Polymerelektrolyt und mit einer Anode auf Basis von metallischem Lithium oder Natrium, ausgehend von einer Ausgangsschichtzelle mit grosser Oberfläche, die ein Anodenband auf Basis von Lithium oder Natrium, einen Polymerelektrolyt sowie eine Kathode in Form eines Dünnfilms aufweist, **dadurch gekennzeichnet, dass** die Kathode die Eigenschaft aufweist, das Lithium oder das Natrium aufzulösen, und ein scharfkantiges mechanisches Schneiden der Ausgangszelle vorgenommen wird, derart, dass ein Phänomen der Selbstheilung ins Spiel kommt.

**2.** Verfahren nach Anspruch 1, **dadurch gekennzeichnet, dass** die Selbstheilung zu einer chemischen Auflösung von allem Lithium und Natrium in der Kathode führt, das im Laufe des Schneidens mit der Kathode in Kontakt war.

**3.** Verfahren nach Anspruch 1, **dadurch gekennzeichnet, dass** die Anode auf Basis von metallischem Lithium ist.

**4.** Verfahren nach Anspruch 1, **dadurch gekennzeichnet, dass** der Polymerelektrolyt ein Leiter für Alkaliionen der Anode ist und gleichermassen als Separator zwischen der Anode und der Kathode dient.

**5.** Verfahren nach Anspruch 1, **dadurch gekennzeichnet, dass** die Ausgangszelle eine Verbundkathode aufweist, die aus einer von Lithium oder Natrium reduzierbaren Verbindung, einem elektronisch leitenden Additiv und einem Polymerelektrolytbinder gebildet ist.

**6.** Verfahren nach Anspruch 1, **dadurch gekennzeichnet, dass** ein dünner elektronisch leitender Überzug auf der Aussenseite der Anode und eventuell der Kathode vorgesehen wird, dessen Leitermaterial gegenüber dem Elektrodenmaterial chemisch inert ist und gleichermassen dazu dient, permanente elektrische Kontakte auf den Aussenseiten der geschnittenen Zellen auszubilden.

**7.** Verfahren nach Anspruch 1, **dadurch gekennzeichnet, dass** die Ausgangszelle ausgehend von kontinuierlichen Anodenfilmen, Kathodenfilmen und Polymerelektrolytfilmen erhalten wird, die durch Filmbeschichtungs- und Filmtransferverfahren zusammengesetzt werden, wobei die Filme aneinander haften.

8. Verfahren nach Anspruch 1, **dadurch gekennzeichnet, dass** die erhaltenen dünnen Zellen parallel oder in Serie aneinandergesetzt werden.

9. Verfahren nach Anspruch 8, **dadurch gekennzeichnet, dass** die Zellen nach ihrer Zickzackfaltung aneinandergesetzt werden.

10. Verfahren nach Anspruch 1 oder 8, **dadurch gekennzeichnet, dass** die einzelnen oder aneinandergesetzten Zellen, parallel oder in Serie angeordnet, in eine von einem einzigen Gehäuse gebildeten Umhüllung eingesetzt werden.

11. Verfahren nach Anspruch 10, **dadurch gekennzeichnet, dass** der Kontaktanschluss der Dünnschichtzellen von den Aussenseiten der einzelnen oder zusammengesetzten Zellen gebildet wird.

12. Verfahren nach Anspruch 6, **dadurch gekennzeichnet, dass** die Dicke des leitenden Überzugs der Anode weniger ist als 5 Mikrometer beträgt, um das Gewicht und das Volumen zu minimieren und die Flexibilität der Dünnschichtzellenanordnung zu erhalten.

13. Verfahren nach Anspruch 6, **dadurch gekennzeichnet, dass** der leitende Überzug ein dünnes Metallband auf Basis von Nickel oder Eisen ist.

14. Verfahren nach Anspruch 6, **dadurch gekennzeichnet, dass** der leitende Überzug ein Verbundstoff ist, der einen inerten Polymerbinder und eine dispergierte und gegen das Elektrodenmaterial inerte elektronisch leitende Ladung aufweist, wobei der leitende Überzug gegenüber den aktiven Materialien der entsprechenden Elektrode stabil ist.

15. Verfahren nach Anspruch 14, **dadurch gekennzeichnet, dass** die leitende Ladung ein zu Lithium inertes leitfähiges Pulver ist, das Metallnitride, -carbide- und -boride enthält.

16. Verfahren nach Anspruch 14, **dadurch gekennzeichnet, dass** die leitende Ladung im Falle des leitenden Überzugs der Kathode Kohlenstoff aufweist.

17. Verfahren nach Anspruch 14, **dadurch gekennzeichnet, dass** der inerte Polymerbinder kein Ionenleiter ist und Monomergruppen von Ethylen und Propylen aufweist, wie Polyethylen, Polypropylen oder EPDM oder Monomergruppen von Urethan, wie Polyurethan.

18. Verfahren nach Anspruch 14, **dadurch gekennzeichnet, dass** der inerte Polymerbinder kein Ionenleiter ist und aus einem vernetzbaren Prepolymer gebildet ist.

19. Verfahren nach Anspruch 18, **dadurch gekennzeichnet, dass** das Prepolymer vernetzbare funktionelle Gruppen besitzt, wie Acrylate, Methacrylate, Allyle und Vinyle.

20. Verfahren nach Anspruch 17, **dadurch gekennzeichnet, dass** im Falle der Kathode der inerte Polymerbinder gleichermassen fluorierte Gruppen aufweist, wie PVDF und seine Copolymere.

21. Verfahren nach einem der Ansprüche 14 bis 20, **dadurch gekennzeichnet, dass** der inerte Polymerbinder ein Klebstoff ist, um die Positionierung der Zellen zu erleichtem und die Qualität der elektrischen Kontakte zu fördern.

22. Verfahren nach Anspruch 21, **dadurch gekennzeichnet, dass** der inerte Polymerbinder ein Heissklebstoff ist.

23. Verfahren nach Anspruch 13, **dadurch gekennzeichnet, dass** der leitende Verbundüberzug einen Oberflächenwiderstand zwischen 0,1 und 1000 $\Omega/cm^2$ besitzt, um einen Kurzschlussstrom beim Schneiden zu begrenzen, so dass der Ladungszustand erhalten bleibt und wegen der Sicherheit der Schneidvorgänge.

24. Verfahren nach Anspruch 23, **dadurch gekennzeichnet, dass** der Oberflächenwiderstand zwischen 1 und 300 $\Omega/cm^2$ schwankt.

**25.** Verfahren nach Anspruch 1, **dadurch gekennzeichnet, dass** die Ausgangsschichtzelle auf mindestens einer ihrer Seiten einen abziehbaren Trägerfilm aufweist, um ihre Produktion und ihre Handhabung zu erleichtern.

**26.** Verfahren nach Anspruch 25, **dadurch gekennzeichnet, dass** der abziehbare Trägerfilm hauptsächlich aus Polypropylen oder Polyethylen gebildet ist.

**27.** Verfahren nach Anspruch 25, **dadurch gekennzeichnet, dass** der abziehbare Träger unmittelbar vor dem Schneidvorgang der Zellen entfernt wird.

**28.** Verfahren nach Anspruch 1, **dadurch gekennzeichnet, dass** die Ausgangsschichtzelle durch Beschichtungs- und Transferverfahren erhalten wird, und dass es vor und nach dem Transfer von Filmen Vernetzungsschritte aufweist.

**29.** Verfahren nach Anspruch 4, **dadurch gekennzeichnet, dass** der Polymerelektrolyt des Separators aus einem Produkt gebildet ist, das eine Molmasse über 50000 aufweist, um Filme zu erhalten, die nach kontinuierlichen Laminierungsverfahren handhabbar und transferierbar sind.

**30.** Verfahren nach Anspruch 1, **dadurch gekennzeichnet, dass** eine Gelierung des Polymerelektrolyten durch Zugabe von flüssigen polaren aprotischen Lösemitteln vorgenommen wird, um die Ionenleitfähigkeit bei Umgebungstemperatur zu optimieren.

**31.** Verfahren nach Anspruch 1, **dadurch gekennzeichnet, dass** die Ausgangsschichtzelle vor dem Schneiden auf eine Temperatur gekühlt wird, die unter der des Glasumwandlungspunktes des Elektrolyten liegt, um die Ionenleitfähigkeit während des Schneidvorgangs zu reduzieren.

**32.** Verfahren nach Anspruch 1, **dadurch gekennzeichnet, dass** der Polymerelektrolyt aus einer Polymermatrix gebildet ist und dass diese durch Zugabe eines im Elektrolyten löslichen Alkalimetallsalzes leitfähig gemacht wird.

**33.** Verfahren nach Anspruch 1, **dadurch gekennzeichnet, dass** der Polymerelektrolyt aus einer Polymermatrix gebildet ist und dass diese durch Zugabe mindestens eines polaren aprotischen Lösemittels leitfähig gemacht wird.

**34.** Verfahren nach Anspruch 33, **dadurch gekennzeichnet, dass** die Hinzufügung eines flüssigen polaren aprotischen Lösemittels nach dem Schneidvorgang vorgenommen wird, um den Kurzschlussstrom beim Schneiden zu minimieren.

**35.** Verfahren nach Anspruch 1 oder 30, **dadurch gekennzeichnet, dass** nach dem Schneidvorgang ein Alkalisalz zugegeben wird, um den Kurzschlussstrom zu minimieren.

**36.** Verfahren nach einem der Ansprüche 30, 32, 35, **dadurch gekennzeichnet, dass** die Zugabe von polaren aprotischen Lösemitteln oder von Salz oder beiden durch die Verwendung von mindestens einem permeablen leitenden Verbundüberzug erleichtert wird, um ihre Einführung zu erleichtern.

**37.** Verfahren nach Anspruch 1, **dadurch gekennzeichnet, dass** der mechanische Schneidvorgang mittels Werkzeugen zum Stanzen (blanking), Drücken (crush cutting) oder Scheren (score cutting) vorgenommen wird.

**38.** Verfahren nach Anspruch 37, **dadurch gekennzeichnet, dass** das Schneiden in Gegenwart eines inerten oder reaktiven Schmiermittels vorgenommen wird.

**39.** Verfahren nach Anspruch 1, **dadurch gekennzeichnet, dass** während oder nach dem Schneidvorgang eine chemische Reaktion des Lithiums oder des Natriums vorgenommen wird, die auf der geschnittenen Kante vorhanden sind, um jeglichen Kurzschluss zu eliminieren und die laterale elektrochemische Aktivität zu neutralisieren.

**40.** Verfahren nach Anspruch 39, **dadurch gekennzeichnet, dass** die chemische Reaktion in Gegenwart von Reagenzien vorgenommen wird, die geeignet sind, das auf der Kante vorhandene Lithium zu oxidieren, und die Flüssigkeiten oder Gase sind, die geeignet sind, eine elektrisch isolierende und im Polymerelektrolyten unlösliche Lithiumverbindung zu bilden.

**41.** Verfahren nach Anspruch 40, **dadurch gekennzeichnet, dass** das Reagens Luft ist.

**42.** Verfahren nach Anspruch 40, **dadurch gekennzeichnet, dass** die Verbindung auf Basis von Carbonaten, Oxyanionen, Oxiden, Chalcogeniden, Fluorderivaten oder Alkoholaten gebildet ist.

**43.** Verfahren nach Anspruch 9, **dadurch gekennzeichnet, dass** eine ungerade Anzahl von geschnittenen Zellbasiseinheiten aufeinandergesetzt werden, dann in Zickzack gefaltet werden und die Anordnung durch Aussenseiten abgeschlossen wird, die entgegengesetzte Polaritäten aufweisen.

**44.** Verfahren nach Anspruch 43, **dadurch gekennzeichnet, dass** die Zellen so aufeinandergesetzt werden, dass durch einfaches Aneinandersetzen eine unendliche Anzahl von Montagen parallel oder in Serie vorgenommen wird.

**45.** Verfahren nach Anspruch 1, **dadurch gekennzeichnet, dass** die geschnittenen Zellen einzeln oder in Gruppen in einen einzigen Behälter gesetzt werden, wobei die Aussenseiten der Zellen und der Anordnungen verwendet werden, um die Stromverteilung zu gewährleisten.

**46.** Verfahren nach Anspruch 10, **dadurch gekennzeichnet, dass** die Kanten der geschnittenen Zelle durch Oxidation des Lithiums und Bildung eines nicht leitenden Salzes gefestigt werden, um jegliche unerwünschte Deformation zu vermeiden.

**47.** Verfahren nach Anspruch 46, **dadurch gekennzeichnet, dass** die Kante durch eine Polymerisationsreaktion gefestigt wird, die durch das frisch geschnittene Lithium initiiert wird.

**48.** Zelle, die durch einVerfahren nach einem der Ansprüche 1 bis 47 erhalten werden kann.

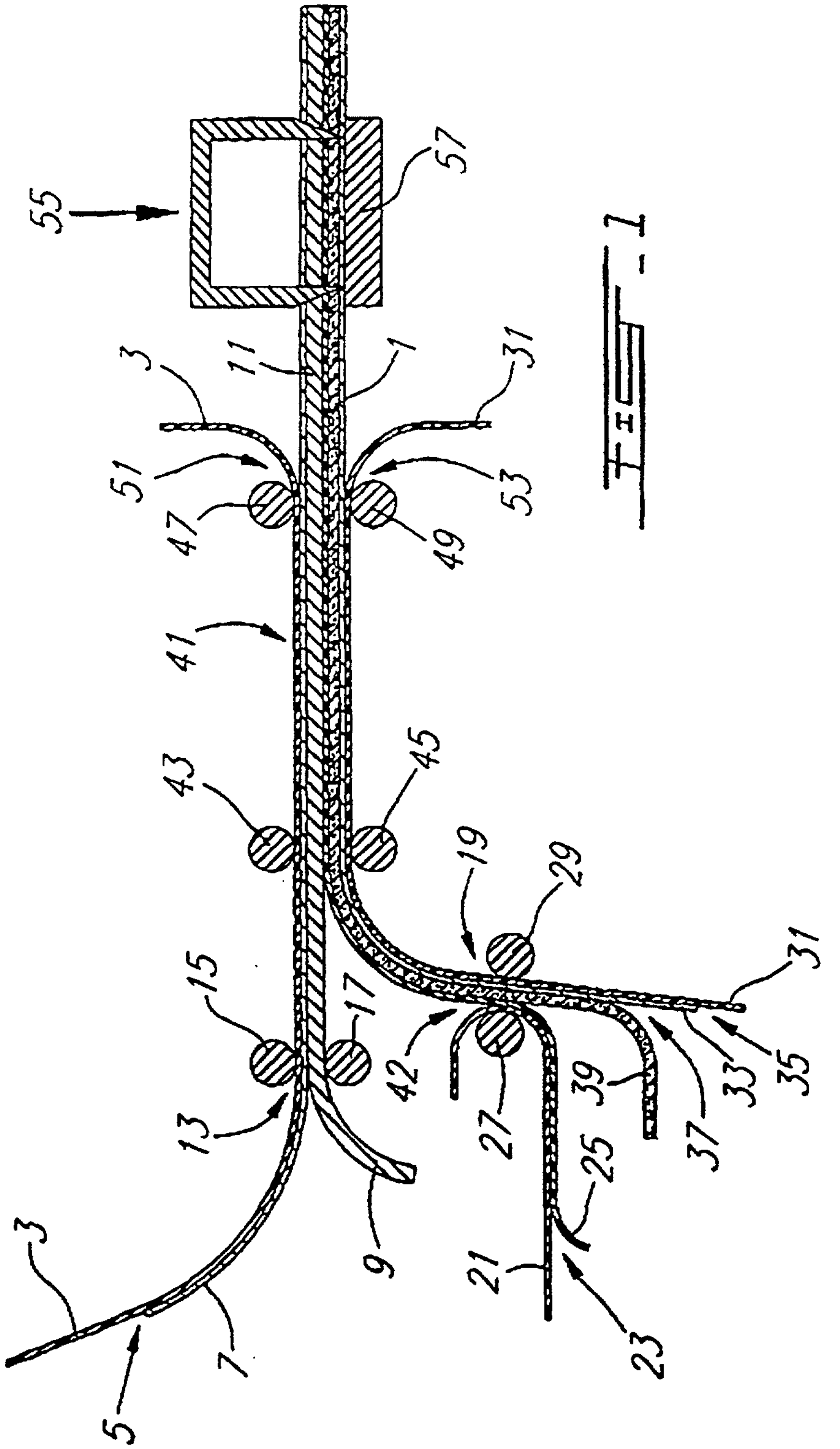
55
57
11
1
3
31
51
53
47
49
41
43
45
19
29
15
17
42
27
39
37
33
35
13
9
25
21
23
7
5

FIG. 1

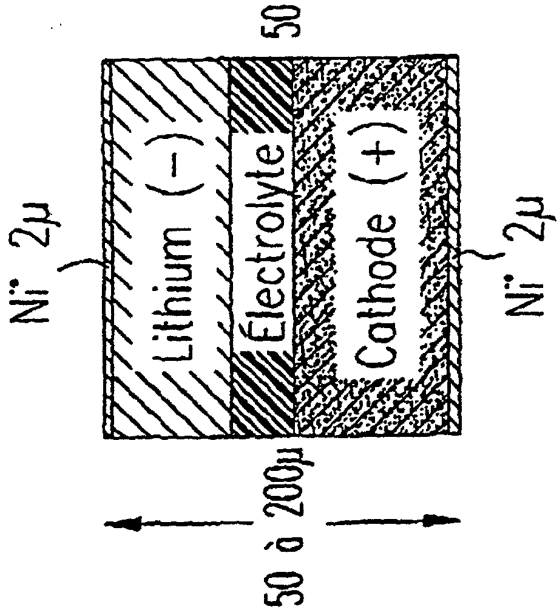


FIG. 2a

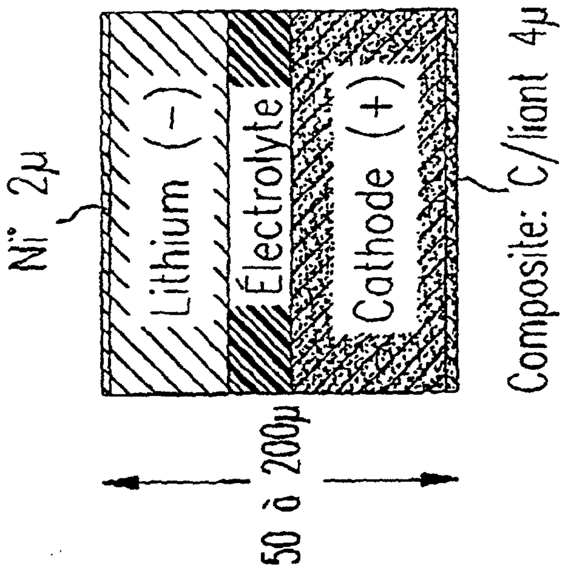


FIG. 2b

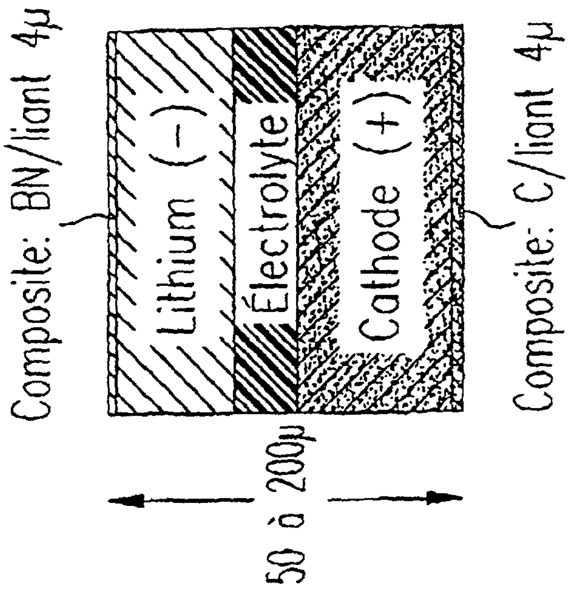


FIG. 2c

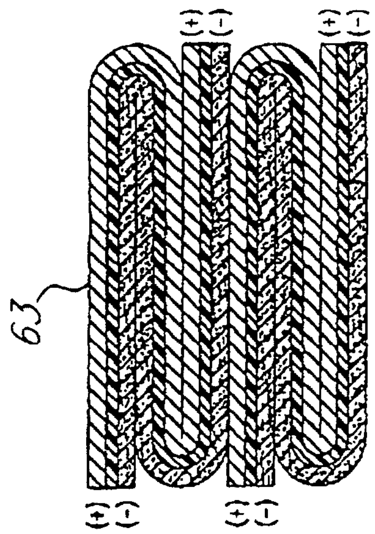


FIG - 3c

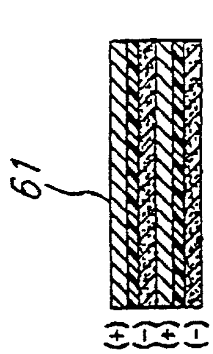


FIG - 3b

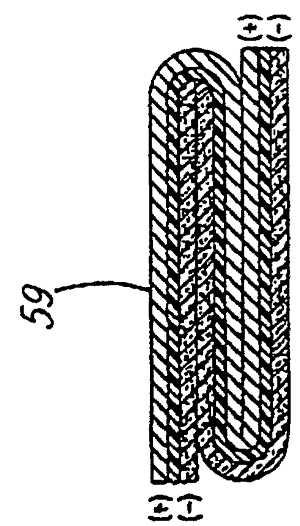


FIG - 3a

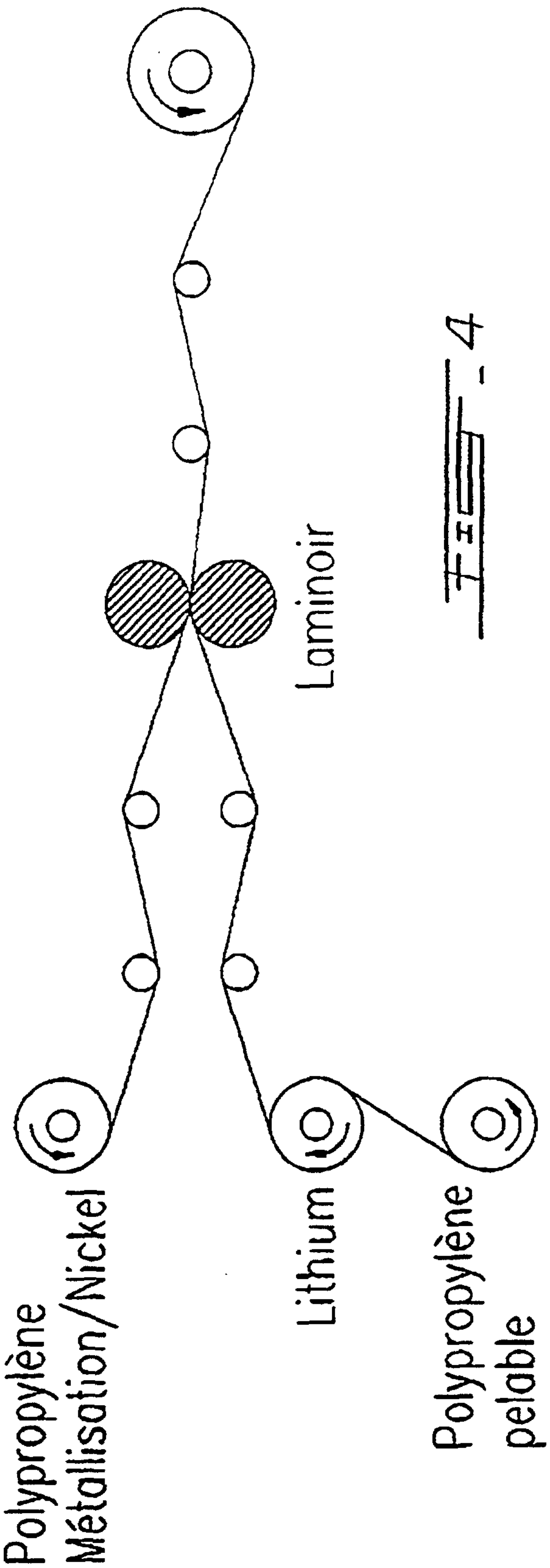
Polypropylène
Métallisation/Nickel
Lithium
Polypropylène
pelable
Laminoir

FIG. 4

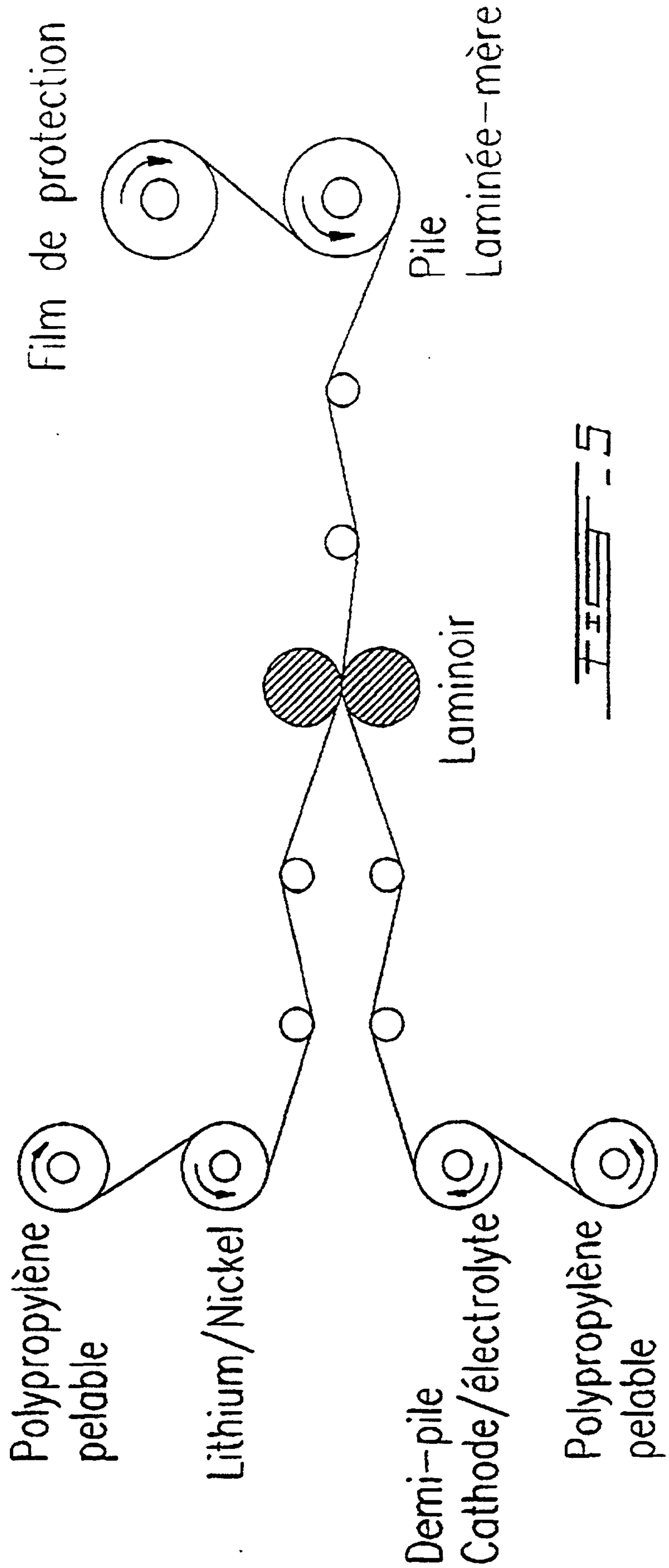
Film de protection
Pile
Laminée-mère
Laminoir
Polypropylène
pelable
Lithium/Nickel
Demi-pile
Cathode/électrolyte
Polypropylène
pelable

FIG. 5

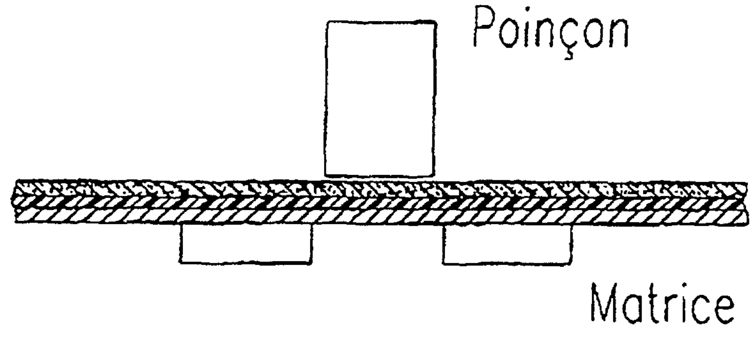


FIG. 6

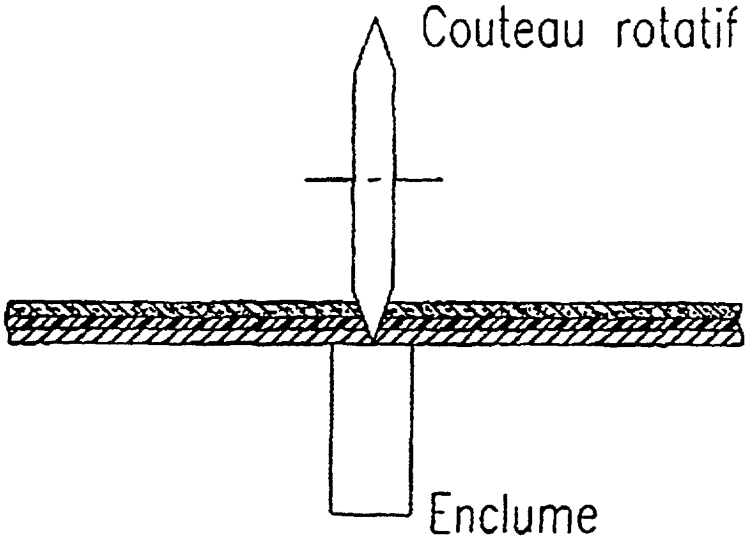


FIG. 7

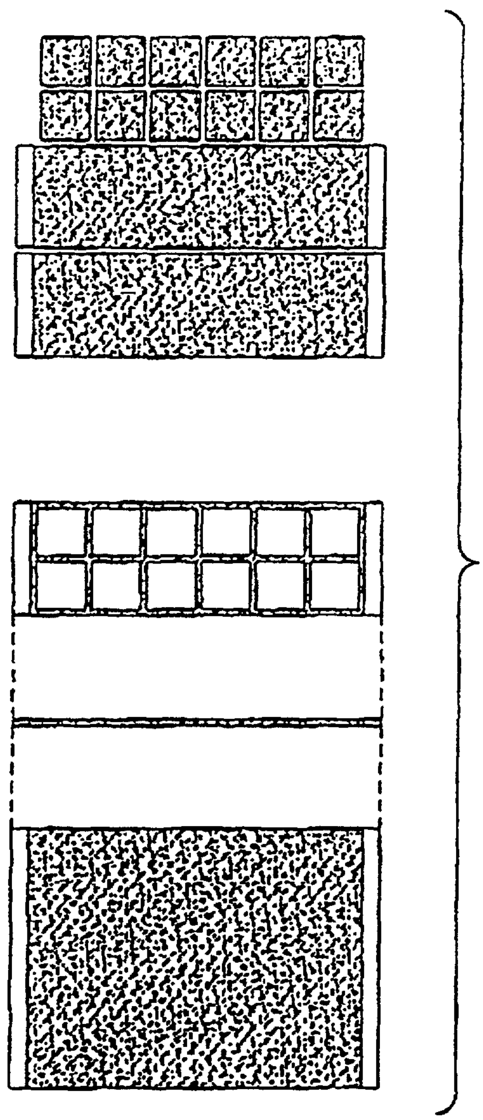

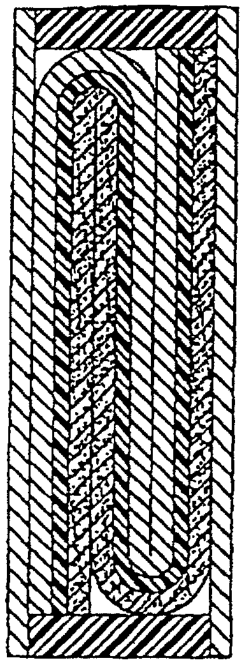

FIG - 9b

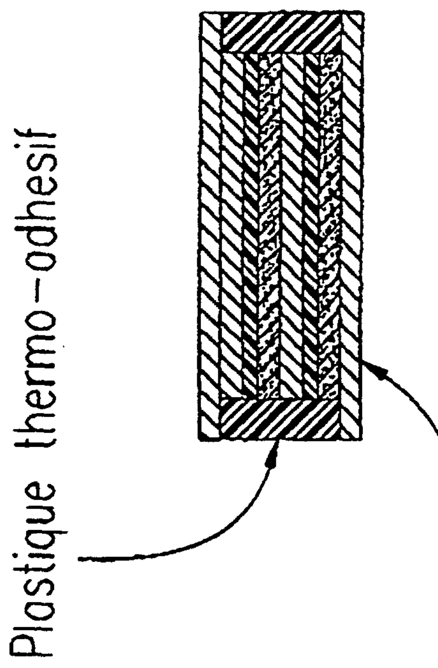


FIG - 9a

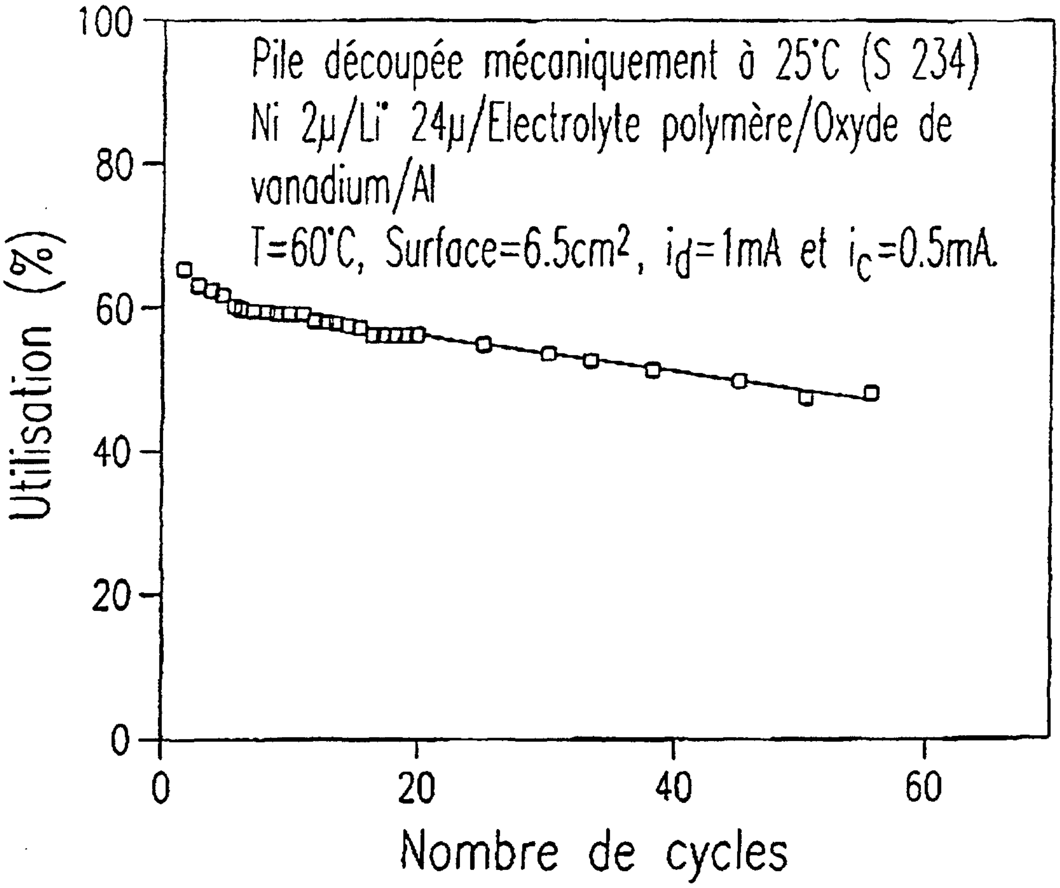
Pile découpée mécaniquement à 25°C (S 234)
Ni 2μ/Li° 24μ/Electrolyte polymère/Oxyde de vanadium/Al
T=60°C, Surface=6.5cm2, id=1mA et ic=0.5mA
Utilisation (%)
100
80
60
40
20
0
0
20
40
60
Nombre de cycles

FIG. 10